# EUROPEAN PATENT APPLICATION

(11) **EP 1 555 115 A1**
(43) Date of publication of application: **20.07.2005**
(21) Application number: 04000863.3
(22) Date of filing: 16.01.2004
(51) Int. Cl.: B30B 15/06, B32B 27/10, B32B 31/20, B29C 33/38, B44C 5/04

(54) **Fabrication of decorative laminates and panels**

(71) Applicant: BERRY FINANCE NV, 8780 Oostrozebeke (BE)
(72) Inventor: Ljosland, Alf, 4580 Lyngdal (NO); Hindersland, Leif Kare, 4580 Lyngdal (NO)
(74) Representative: Grünecker, Kinkeldey, Stockmair & Schwanhäusser Anwaltssozietät

(57) **Abstract**

The invention relates to a Matrix (1,2) for fabrication of a matrix (3') in the fabrication process of a decorative laminate (11') for a panel with a surface structure wherein the matrix (1,2) for fabrication of the matrix (3') comprises a wood member (13) with a surface structure. The invention furthermore relates to production matrix (10') for the fabrication of a decorative laminate (11') for a panel with a surface structure wherein the surface structure of the production matrix (10') is pressed into the production matrix (10'). The invention further relates to a method of fabrication of a decorative laminate (11') for a panel with a surface structure wherein a production matrix (10') of above is pressed together with the decorative laminate (11) in order to at least partially transfer the surface structure of the production matrix (10') onto the decorative laminate (11). The invention further relates to a decorative laminate, a panel and a fabrication method of a panel.

## Description

The invention relates to a matrix for fabrication of a matrix in the fabrication process of a decorative laminate, to a production matrix for the fabrication of a decorative laminate, to a method of fabrication of a decorative laminate, to a decorative laminate, to a panel and to a method of fabrication of a panel.

Decorative laminates are part of panels which are used for covering floors of rooms (floor panels), walls, doors, ceilings or the like.

Such decorative laminates have a decorative layer which is provided with a colour pattern in order to imitate the colour and pattern of wood, veneer, stone, tiles or the like. The decorative laminates may be high pressure laminates. They may comprise a support layer for supporting the decorative layer and/or an abrasive overlay for protecting the decorative layer.

The present invention relates to such a decorative laminate with a surface structure which is similar to that of the type of wood which is imitated by the decorative layer or similar to any other type of material. The surface structure results in an unevenness of the surface. This unevenness is present in particular but not only in case the scraped surface is to be imitated. A scraped surface gives the impression of the wood surface not being perfectly plane, which under decorative aspects is sometimes desirable.

In order to provide a realistic surface structure, ie. unevenness of the surface, a variation of a surface height of about 100 µm - 300 µm is desirable. Here it is to be noted, that the thickness of the decorative laminate itself is usually not more than 600 µm (0.6 mm) and hence the unevenness of the surface may amount to as much as half of the thickness of the decorative laminate which results in problems in the fabrication of such decorative laminates. The laminate may, nevertheless, be as thick as 1.0 or 1.5 mm. This allows for larger surface height variations, which may range up to approximately the half of the laminates thickness, such that height variations of up to 500 µm 750 µm are desired.

The object of the present invention is therefore to provide the possibility to have decorative laminates (or in the end panels) with a realistic surface structure.

This possibility is provided by a matrix of claim 1 or 2, by a method for fabrication of decorative laminates as provided by claim 6, by a method of fabrication of a panel as provided by claim 16, by a decorative laminate as provided by claim 17, and by a panel of claim 18. Preferred embodiments are disclosed in the dependent claims.

The original matrix comprises a wood member with a surface structure. Such a wood member with a surface structure can be prepared relatively cheaply and furthermore results in exactly the surface which is to be imitated. In order to imitate a scraped surface the wood member is treated by scraping, sand-blasting, grinding, sanding, or the like.

This wood member with the desired surface structure is then used as a matrix for the production of other matrices.

While it is possible to employ the matrix obtained from the matrix with the wood member, for production purposes it is also possible to use this matrix as a primary matrix obtained from the matrix with the wood member in order to prepare secondary and production matrices. Since each matrix (the original matrix with the wood member), the primary, the secondary and the production matrices may be used a couple of times by preparing secondary and production matrices from the primary matrices it is possible to obtain a multiplied number of production matrices from a single matrix having the wood member. The primary, secondary and the production matrices may be used up to a hundred times or more. In other words, by preparing various intermediate matrices it is possible to copy the surface structure of the wood member several times like up to a hundreds or more times.

This copying allows for a significant reduction of the production costs.

The production matrix for the fabrication of a decorative laminate has its surface structure pressed to it.

While it may also be possible to prepare a production matrix by working the surface of the matrix material such that the surface structure is obtained it is here suggested to press the surface structure onto the production matrix. Such a matrix can be prepared much more rapidly.

The production matrix may have a core formed of kraft paper or kraft board. Such kraft paper or kraft board is particularly suitable for matrices since it withstands high pressures during the fabrication process although its surface structure itself is pressed onto or into the production matrix.

The production matrix preferably has a surface structure provided on two sides. Firstly it is possible to easily provide the production matrix with a surface structure on both sides if the surface structure is formed by pressing. Secondly, both surfaces of the production matrix can then be used to fabricate decorative laminates.

The production matrix furthermore preferably comprises an overlay which may be made of paper (such as white paper). Such paper may be impregnated with a thermosetting resin such as melamine. The overlay gives the matrices an increased stability.

The kraft paper or kraft board employed in the primary, the secondary or the production matrix may be impregnated with a resin such as a thermosetting resin as eg. fenolic resin. Thereby the manufactured matrices are laminates which withstand the pressures in the fabrication process of the other matrices or the decorative laminates.

In a fabrication method of a decorative laminate the production matrix is pressed with the material for decorative laminates such that the surface structure of the production matrix is at least partially transferred to the material of the decorative laminate such that the decorative laminate is provided with the desired surface structure. The fabrication method also applies to the case where the decorative laminate is already part of a panel or to the case where the decorative laminate is prepared at the same time as the panel since the material for the decorative laminate and that of the panel (MDF,HDF, etc.) are pressed at the same time.

It is preferable to use both sides of the production matrix to prepare decorative laminates. Furthermore it is preferable to use more than one production matrix in one pressing step such that more than two decorative laminates can be prepared at the same time.

In order to fabricate a panel with a decorative laminate, the decorative laminate is usually glued or pressed on, or laminated to a body of a panel which may comprise or consist of MDF, HDF, cardboard, plastic, metal, or the like.

Since the decorative laminates can be prepared at scales of metres x metres such panels usually have smaller dimensions. Therefore it might be necessary to cut the decorative laminate or to fix the decorative laminate on a large body and afterwards to cut the body into individual panels.

The panels are furthermore provided with joints which allow for interconnection between different panels by tilting, snapping, clicking, angling, or the like.

Preferred embodiments of the matrices, the methods, the decorative laminate and the panel are shown in the Figures. Accordingly, it is shown in:
- Fig. 1: a schematic view of the original matrix and the primary matrix,
- Fig. 2: a schematic view of the materials for the primary matrix,
- Fig. 3: a schematic view of the primary and the secondary matrix,
- Fig. 4: a schematic view of the material for the secondary matrix,
- Fig. 5: a schematic view of the secondary matrix and the production matrix.
- Fig. 6: a schematic view of the pile used for the manufacture of decorative laminates,

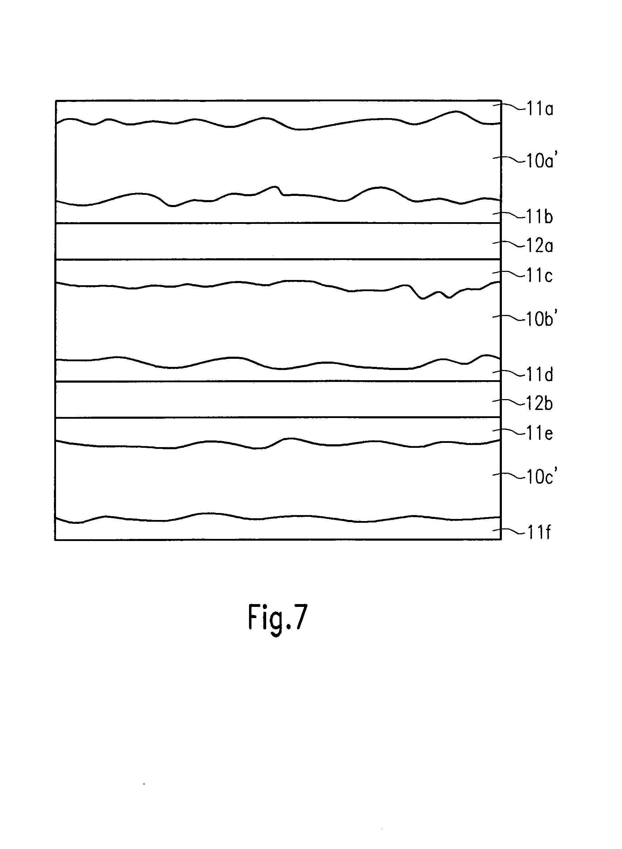

- Fig. 7: a schematic view of the pile of Fig. 6 after pressing,
- Fig. 8: a schematic view of the original matrix,
- Fig. 9: a schematic view of a panel,
- Fig. 10: a three dimensional schematic view of a panel.

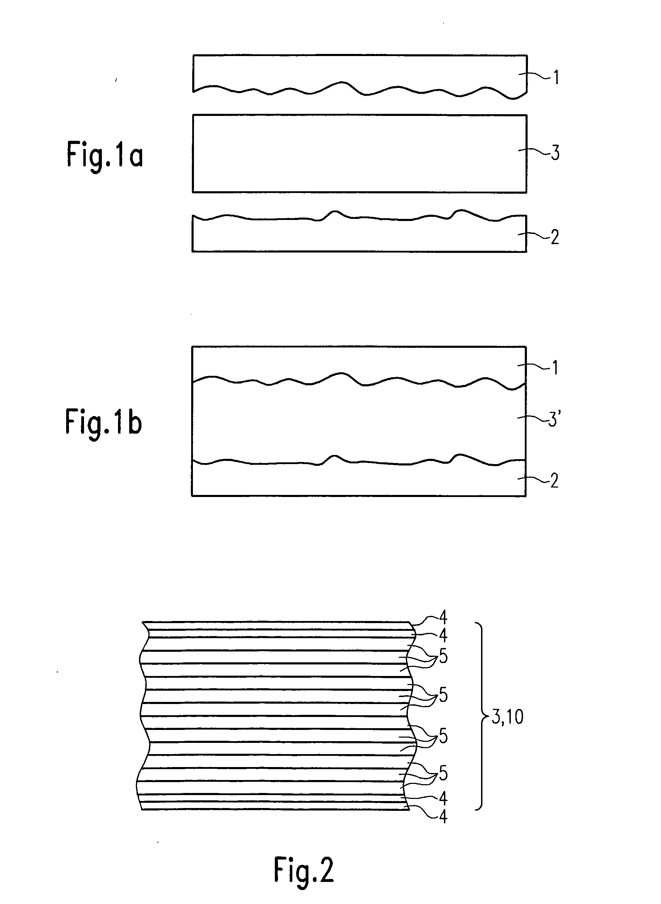

Fig. 1 a shows a schematic view of two original matrices 1, 2 and of the material 3 for a primary matrix 3'.

The surface structure on the bottom of matrix 1 and on the top of matrix 2 is largely exaggerated for clarity purposes. In comparison to the width of the matrices which may be several metres the surface structure, ie. the height variation, is in the range of less than 1 mm. The thickness of the matrices 1, 2 may be around a few millimetres up to a few centimetres.

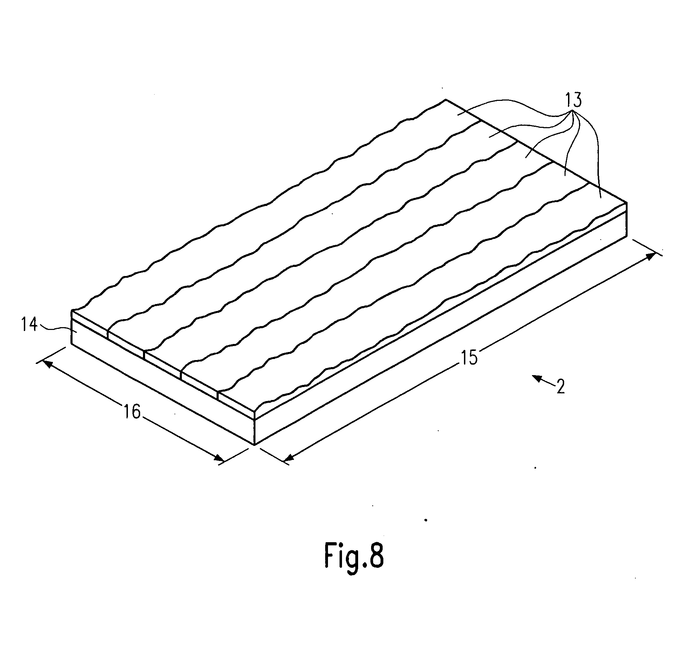

The composition of the original matrices 1, 2 is schematically shown in Fig. 8. The original matrix 2 has a support layer 14 which may consist of, eg. kraft paper or kraft board, and may have several layers thereof. Such a support however is not definitely necessary. On top of the support 14 several wood members 13 are provided. Such a wood member may be a veneer or a wood plate. The wood member 13 may be glued to the support 14.

In the case of the wood member 13 being a thick wood plate, no support 14 is necessary.

The dimensions 16 may be around, eg. 1 m such that if five wood members 13 are present, each wood member has a width of about 20 cm.

The extension 15 may be around 2 to 3 metres. The dimensions of the wood member is essentially limited to certain dimensions in case that a veneer is used which is not available in any scale.

Depending on the production process of the panels the wood members 13 may be provided in the direction of the extension 16 as close to each other as possible or may be separated by fixed amount. Such a separation may be suitable for having a space for the preparation of joints on the panels, where no decorative layer is required.

The surface of the wood member 13 has a certain surface structure. This surface structure may be due to the scraped surface of the wood member 13. The aim is to have this surface structure on the decorative laminate in the end.

As can be seen in Fig. 1 a two of the original matrices 1 and 2, as shown in Fig. 8, are used. The original matrix 1 has the surface structure on the bottom and the original matrix 2 has the surface structure on the top. Both have different surface structures such that the decorative layers obtained in the end also have different surface structures. This is in particular desirable in case irregular surface structures are preferred for decorative purposes.

As can be seen in Fig. 1 a, between the two original matrices 1, 2 the material 3 for a primary matrix 3' is provided. The material 3 of the primary matrix 3' is shown in Fig. 2 in detail.

The material 3 for the primary matrix 3' consists of several layers of kraft paper 5. In Fig. 2 , 12 layers of kraft paper are shown as an example only. More or less layers may be provided such as any number between 1 and 20 layers, such as eg. 5 layers, 10 layers, 15 layers, or the like. The kraft paper may be impregnated with a thermosetting resin such as a fenolic resin.

The 12 layers of kraft paper are provided on the bottom and on the top thereof with two layers 4 of white paper. The white paper may be impregnated with a resin such as melamine in order to increase the stability of the final primary matrix.

The two original matrices 1, 2 and the material 3 for the primary matrix 3' is then pressed together. The pressing may last for half an hour, an hour, or one and a half hours. The required time depends on the surface structure, the kraft paper 5, the temperature, humidity, the employed resin etc.

The primary matrix 3' such obtained is then used for the fabrication of secondary matrices 6', 7'.

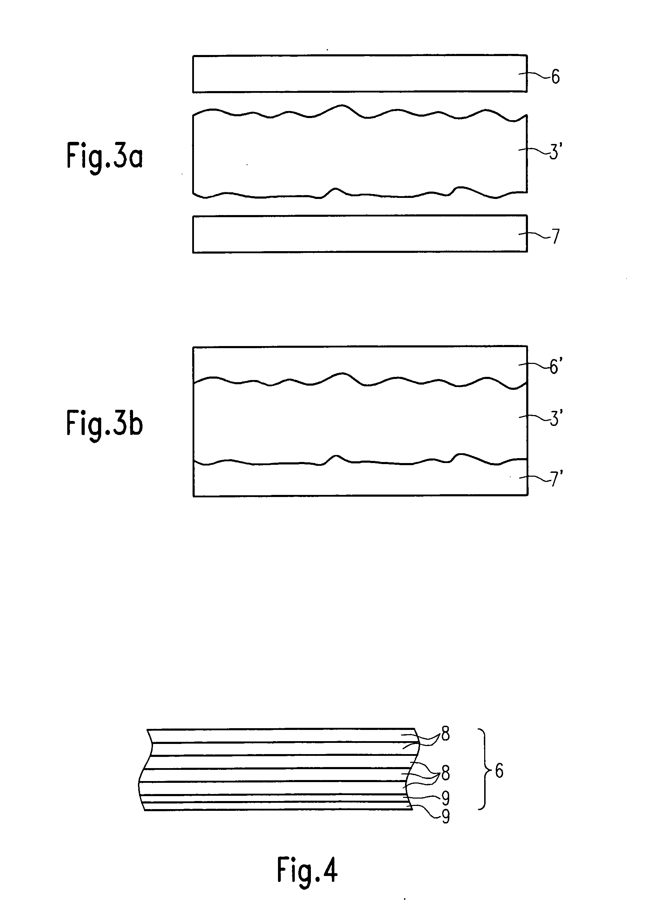

The material 6, 7 for the secondary matrices 6', 7' is shown in Fig. 4. A number of layers of kraft paper 8 together with two layers of white paper 9 are suitable for the material for the secondary matrices. Here the kraft paper and the white paper may be resin impregated as mentioned above eg. for the primary matrix.

Here also more or less layers of kraft paper 8 and of white paper 9 may be used. It will eg. also be possible to use any number in the interval between 4 and 20 or of any subinterval thereof such as 4, 6, 8, 10, 12, 15 or 20 layers of kraft paper 8.

The primary matrix 3' together with the material 6, 7 for the two secondary matrices 6', 7' is pressed together as shown in Fig. 3b such that the surface structure of the primary matrix 3' is transferred to the secondary matrices 6', 7'.

The surface structure of the secondary matrices 6', 7' is then identical to those of the original matrices 1, 2.

From one primary matrix 3' a plurality of secondary matrices 6, 7 may be obtained.

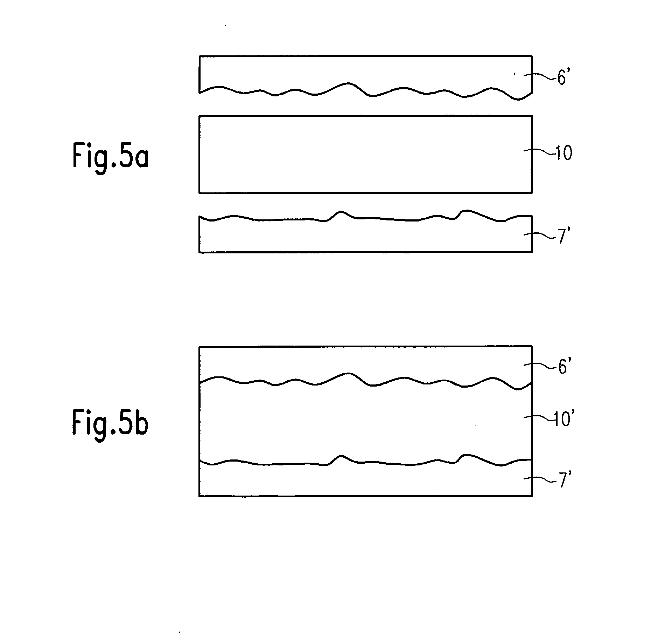

The secondary matrices 6', 7' are then piled together with the material 10 for a production matrix 10' (see Fig. 5). The material 10 for the production matrix 10' may be the same as for the primary matrix 3'. The material 10 however may have more or less layers of kraft paper 5 or of paper overlays 4 compared to the primary matrix 3' or to the example shown in Fig. 2.

As can be seen in Fig. 5b, by pressing the secondary matrices 6', 7' with the material 10 for the fabrication matrix 10', a fabrication matrix 10' is obtained.

Here it is to be noted that from one set of secondary matrices 6', 7' a plurality of production matrices 10' may be obtained.

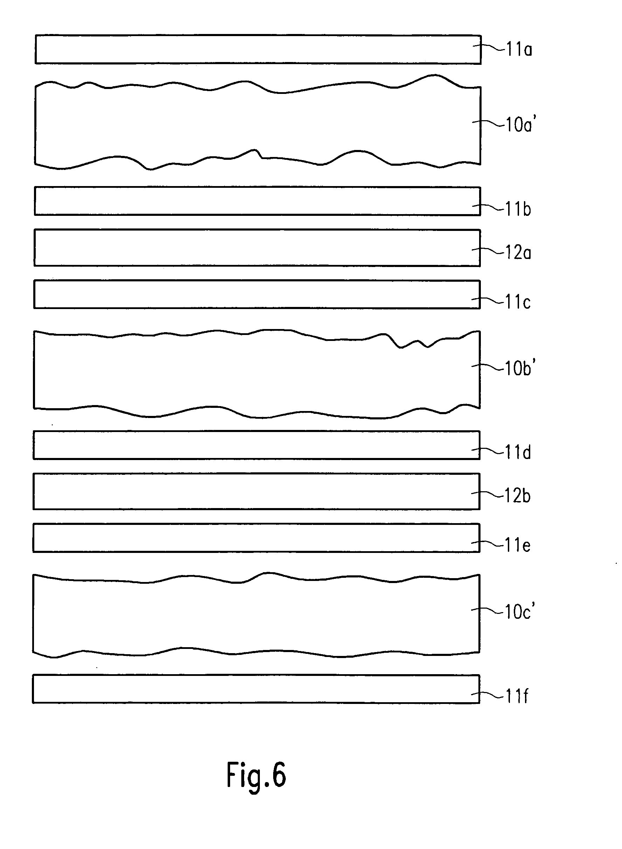

The pile used for the fabrication of decorative laminates is shown in Fig. 6. More than one fabrication matrix 10' is used here. As an example, three production matrices 10a', 10b', 10c' are used.

On the top and on the bottom of each production matrix 10a', 10b', 10c' the materials 11 for a decorative laminate 11' are provided in the required order.

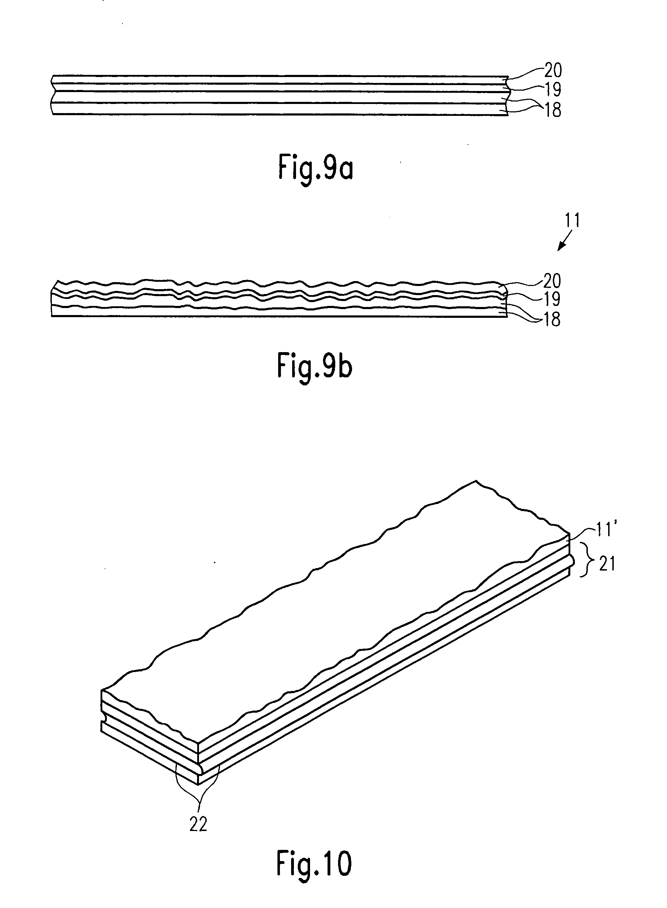

As an example the material 11 b for the decorative laminate to be prepared is shown in Fig. 9a. Two layers of kraft paper 18 are provided together with a decorative layer 19. The decorative layer 19 has the desired colour pattern which may eg. be the image of a wood surface. The decorative layer 19 is covered with an abrasive overlay 20.

Since this abrasive overlay in the end will be the top surface of the panel, the abrasive overlay has to be sufficiently resistant against abrasions such that the decorative layer 19 is sufficiently protected.

The order of the materials shown in Fig. 9a is reversed for the material 11 a such that the abrasive overlay for the material 11 a is at the bottom of the material 11 a (see Fig. 6).

Between the material 11 b, 11c and between the material 11 d, 11e a metal plate 12a, 12b is provided. The metal plates 12a, 12b are in order to ensure homogenisation of the pressure between the different production matrices. The metal plates 12a, 12b are not deformed such that the production of the laminates 11a, 11b is essentially independent of the laminates 11c, 11d etc..

The pile shown in Fig. 6 is then pressed for the required amount of time and with the required pressure such that the surface structure of the production matrices 10a', 10b', 10c' is transferred to the materials 11a, 11b, 11c, 11d, 11e, 11f such that the desired surface structure of the decorative laminates 11a', 11b', 11c', 11d', 11e', 11f' is obtained.

The lamination of the materials 11a, 11 b, 11c, 11 d, 11e, 11f to the laminates 11a', 11b', 11c', 11d', 11e', 11f' may be obtained during this pressing step. The lamination however may also be performed afterwards or before the pressing of the surface structure transfer.

The surface structure of the decorative laminates 11a', 11b', 11c', 11d', 11e', 11f then resemble the surface structure of the original matrix.

Any of the pressing steps, such as the steps for preparation of the primary, secondary and production matrices and in the step for the fabrication of the decorative laminates separation sheets may be provided in order to allow good separability between the different matrices and between the laminate and the matrices. Such separation sheet may eg. be an aluminium foil.

The pressure applied during the fabrication of the primary, the secondary, and the production matrices may be in the range of 50 to 100 kg/cm², preferably 60 to 80 kg/cm², and more preferably around 70 kg/cm² to 75 kg/cm²

The paper overlay of the matrices here is provided by one or two layers of paper. The paper may have a specific weight around 80g/m² such that with two layers thereof 160g/m² is achieved. The specific weight however may also be more or less depending on the number of paper layers, the strength of the paper etc. Specific weights of 10g/m² up to 400g/m² is also suitable.

Instead of a decorative paper, a decorative metal foil, plastic foil, veneer or anything decorative and thin may be used. The paper has the advantage of having a low cost since the decorative pattern may be printed onto the paper and at the same time allows for almost any desired decorative effect.

The pressing of any fabrication step of matrices or decorative laminates may also be performed at elevated temperatures such as with any value (or value of a subinterval) of the interval of 20°C to 200°C.

The decorative layers 11' such obtained may have a surface height variation of not less than 200 µm up to not less than 300µm, 500µm or 750µm.

The fabrication of the panel comprises the gluing or laminating of the decorative laminate onto the body of the panels such as a panel core made of HDF, MDF, wood, plastic, metal, or the like. The fabrication usually furthermore comprises the step of providing joints which allow for interconnection between the different panels such that a closed or essentially closed surface is achieved.

## Claims

1. Matrix (1,2) for fabrication of a matrix (3') in the fabrication process of a decorative laminate (11') for a panel with a surface structure
**characterized in that**
the matrix (1,2) for fabrication of the matrix (3') comprises a wood member (13) with a surface structure.

2. Production matrix (10') for the fabrication of a decorative laminate (11') for a panel with a surface structure
**characterized in that**
the surface structure of the production matrix (10') is pressed into the production matrix (10').

3. Production matrix (10') of claim 2, **characterized in that** the production matrix (10') comprises one or more layers each comprising one kraft paper (5) or kraft board (5), with preferably 5 to 15 layers and more preferably 10 or 11 layers, whereby the layers of kraft paper (5) or kraft board (5) preferably form the core of the production matrix (10').

4. Production matrix (10') of claim 2 or 3, **characterized in that** it has a surface structure provided on two sides.

5. Production matrix (10') of any of claims 2 to 4, **characterized in that** it comprises an overlay (4) which preferably comprises paper which is preferably white.

6. Method of fabrication of a decorative laminate (11') for a panel with a surface structure wherein a production matrix (10') of any of claims 2 to 5 is pressed together with the material (11) for a decorative laminate (11') in order to at least partially transfer the surface structure of the production matrix (10') onto the decorative laminate (11').

7. Method of claim 6 **characterized in that** the decorative laminate (11') comprises a decorative layer (19), preferably paper, which has a decorative colour pattern.

8. Method of claims 6 or 7, **characterized in that** the decorative laminate (11) comprises at least one, preferably two or three, kraft papers (18) or kraft boards (18).

9. Method of any of claims 6 to 8, **characterized in that** the decorative laminate (11') comprises an abrasive overlay (20).

10. Method of any of claims 6 to 9, **characterized in that** between the decorative laminate (11') and the matrix (1) is provided a separation sheet which is for ensuring good separation of the decorative laminate (11') and of the matrix (1) after pressing.

11. Method of any of claims 6 to 10, **characterized in that** the pressing lasts for about 10 to 120 minutes, preferably 20 to 60 minutes, more preferably 25 to 35 minutes and even more preferably around 28 to 30 minutes.

12. Method of any of claims 6 to 11 **characterized in that** the pressure is about 50 to 100 kg/cm², preferably 60 to 80 kg/cm², and more preferably around 70 kg/cm² to 75 kg/cm².

13. Method of any of claims 6 to 12 **characterized in that** the decorative laminate (11') has a thickness between 0.2 mm to 1.5 mm, preferably around 0.5 mm to 0.7 and more preferably around 0.6 mm.

14. Method of any of claims 6 to 13 **characterized in that** the material (11) for decorative laminates is provided on two different sides of one production matrix (10').

15. Method of any of claims 6 to 14 **characterized in that** at least two, preferably three, four or more production matrices (10a', 10b', 10c') are used during the same pressing.

16. Method of fabrication of a panel comprising a decorative laminate (11) **characterized by** the step of preparing the decorative laminate (11') as in any of claims 6 to 15 or using a decorative laminate prepared as in any of claims 6 to 15.

17. Decorative laminate **characterized by** having its surface structure pressed thereon as in any of claims 6 to 15.

18. Panel **characterized by** having a decorative laminate as of claim 17.
